# FASCICULE DE BREVET EUROPEEN

(11) **EP 1 208 149 B1**
(45) Date de publication et mention de la délivrance du brevet: **18.01.2006**
(21) Numéro de dépôt: 00956330.5
(22) Date de dépôt: 25.07.2000
(51) Int. Cl.: C08K 5/14, C08L 67/04

(54) **COMPOSITIONS DE POLYESTERS ALIPHATIQUES THERMOPLASTIQUES, PROCEDE POUR LEUR PREPARATION ET UTILISATION DE CELLES-CI**
THERMOPLASTISCHE ALIPHATISCHE POLYESTERZUSAMMENSETZUNGEN, VERFAHREN ZU IHRER HERSTELLUNG UND IHRE VERWENDUNGEN
THERMOPLASTIC ALIPHATIC POLYESTER COMPOSITIONS, PREPARATION METHOD AND USES THEREOF

(30) Priorité: 27.07.1999 BE 9900510
(43) Date de publication de la demande: 29.05.2002
(73) Titulaire: SOLVAY (Société Anonyme), 1050 Bruxelles (BE)
(72) Inventeur: CLAEYS, Ivan, B-3191 Boortmeerbeek (BE); WAUTIER, Henri, B-7090 Braine-Le-Comte (BE); MANFREDI, Dino, B-9052 Zwijnaarde (BE)
(74) Mandataire: Jacques, Philippe
(86) Numéro de dépôt international: PCT/EP2000/007274
(87) Numéro de publication internationale: WO 2001/007512

(56) Documents cités:
- EP-A- 0 443 270
- WO-A-95/18169
- US-A- 5 798 435
- CAVALLARO P ET AL: "REACTIVE BLENDING OF BIOAFFINE POLYESTERS THROUGH FREE-RADICAL PROCESSES" ANGEWANDTE MAKROMOLEKULARE CHEMIE. APPLIED MACROMOLECULAR CHEMISTRY AND PHYSICS,DE,WILEY VCH,WEINHEIM, vol. 210, 1 août 1993 (1993-08-01), pages 129-141, XP000396026 ISSN: 0003-3146

## Description

L'invention concerne des compositions de polyesters aliphatiques thermoplastiques, un procédé pour leur préparation, leur utilisation pour la fabrication de films, de mousses, de flacons ou de produits thermoformés, les films, mousses, flacons et produits thermoformés obtenus et l'utilisation des films obtenus.

Les polyesters aliphatiques thermoplastiques et en particulier les polymères de l'ε-caprolactone, ont un grand nombre de propriétés désirables, incluant une bonne biodégradabilité et une bonne résistance à la traction. Ces propriétés rendent les polyesters aliphatiques thermoplastiques et en particulier les polymères de l'ε-caprolactone, particulièrement attractifs dans l'industrie des polymères.

Pour beaucoup d'applications potentielles des polyesters aliphatiques thermoplastiques, et en particulier des polymères de l'ε-caprolactone, il est néanmoins nécessaire que ces polymères se caractérisent par un comportement de durcissement sous élongation à l'état fondu. On peut citer parmi ces applications, les films utilisés par exemple pour la réalisation de sacs poubelles, de films pour l'agriculture, de films pour l'emballage, de linceuls, de couches-culottes ou de films adhésifs ; les mousses, les flacons et les produits thermoformés dont par exemple les pots pour jeunes plantes.

Malheureusement, les polyesters thermoplastiques et en particulier les polymères de l'ε-caprolactone, ne présentent pas de manière naturelle ce comportement de durcissement sous élongation à l'état fondu.

Il est connu d'augmenter la thermorésistance des polymères de l'ε-caprolactone en provoquant leur réticulation par réaction avec des peroxydes organiques ou par irradiation avec des rayonnements gamma. Néanmoins, dans ces cas, les polymères obtenus se caractérisent par un taux de gel (taux de polymères insolubles) très élevé ayant pour conséquence l'apparition de zones hétérogènes dans les films qu'ils forment et dès lors une mauvaise qualité de surface de ces films. Par ailleurs, on constate très souvent une crevaison de la bulle que l'on obtient lors du soufflage, rendant impossible l'obtention d'un film.

Par ailleurs, il est aussi connu d'ajouter de l'amidon aux polymères de l'ε-caprolactone pour que les compositions obtenues présentent les propriétés requises pour donner lieu à la fabrication de films (C. Bastioli, Macromol. Symp., 135, 193-204 (1998)). Malheureusement, les polymères d'ε-caprolactone présents dans ces compositions se caractérisent de manière désavantageuse par une vitesse de cristallisation trop faible, lorsque la température extérieure est trop élevée, que pour assurer un rendement de production suffisant des films formés.

La présente invention a pour objet des compositions de polyesters aliphatiques thermoplastiques, en particulier de polymères de l'ε-caprolactone, qui ne présentent pas les inconvénients précités.

La présente invention a également pour objet un procédé de préparation de ces compositions.

L'invention a également pour objet l'utilisation de ces compositions pour la fabrication de films, de mousses, de flacons ou de produits thermoformés ainsi que les films, mousses, flacons et produits thermoformés obtenus et l'utilisation des films obtenus pour fabriquer des sacs poubelles, des films pour l'agriculture, des films pour l'emballage, des linceuls, des couches-culottes et des films adhésifs.

A cet effet, l'invention concerne tout d'abord des compositions de polyesters aliphatiques thermoplastiques caractérisées par une valeur de RMFI comprise entre 1,1 et 2,5.

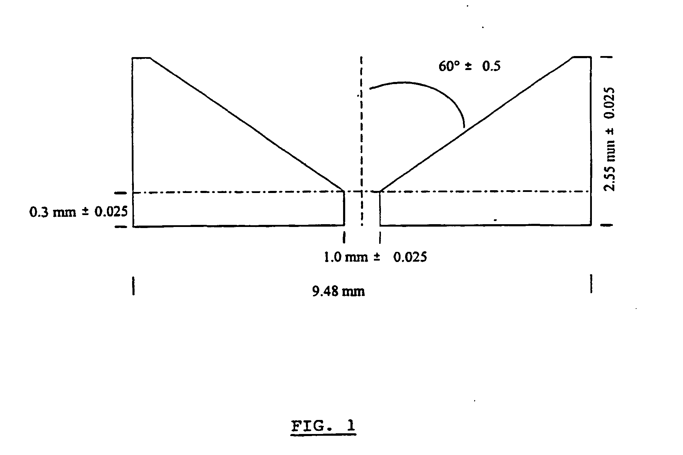

Par RMFI, on entend désigner, aux fins de la présente invention, le rapport entre deux MFI mesurés à la même température, à savoir le rapport entre le MFI_{8/2} obtenu avec une filière cylindrique (hauteur 8 mm +/- 0,025, diamètre 2,095 mm +/- 0,003) et le MFI_{0,3/1} obtenu avec une filière conique telle que représentée à la figure 1. La filière conique est caractérisée par un angle du cône de 60° +/- 0,5, un diamètre extérieur de 9,48 mm, un diamètre intérieur de 1,0 mm +/- 0,025, une hauteur totale de 2,55 mm +/- 0,025 et une hauteur de la section cylindrique de 0,3 mm +/- 0,025.

Les deux MFI sont obtenus en mesurant la quantité de polymère passant au travers d'une filière calibrée, dont les caractéristiques sont reprises ci-dessus, sous un poids de 5 kg et à une même température. La température de mesure est en général supérieure de 20 à 40 °C à la température de fusion du polyester aliphatique thermoplastique, en particulier supérieure de 20 à 40 °C à la température de fusion des polymères de l'ε-caprolactone. De préférence, la température de mesure est supérieure de 40 °C à la température de fusion du polyester aliphatique thermoplastique, en particulier supérieure de 40 °C à la température de fusion des polymères de l'ε-caprolactone. La température de mesure est habituellement de 100 °C pour les homopolymères de l'ε-caprolactone. Les MFI s'expriment en dg/min.

La valeur du RMFI est une indication du taux de branchements dans les compositions selon l'invention. Une valeur de RMFI comprise entre 1,1 et 2,5 correspond généralement à un taux de branchements faible mais non nul.

Les compositions selon l'invention se caractérisent habituellement par une valeur de RMFI supérieure ou égale à 1,1, de préférence supérieure ou égale à 1,2, de manière particulièrement préférée supérieure ou égale à 1,3.

Les compositions selon l'invention se caractérisent habituellement par une valeur de RMFI inférieure ou égale à 2,5, de préférence inférieure ou égale à 2, de manière particulièrement préférée inférieure ou égale à 1,8.

Les compositions selon l'invention présentent également un taux de gel inférieur ou égal à 0,5 %.

Par taux de gel, on entend désigner, aux fins de la présente invention, le taux de polymères insolubles dans le chloroforme extraits au moyen d'un soxhlet après 8 heures.

Les compositions selon l'invention se caractérisent habituellement par un taux de gel inférieur ou égal à 0,5 %, de préférence égal à zéro.

Les compositions selon l'invention présentent également un comportement de durcissement sous élongation à l'état fondu caractérisé par une augmentation exponentielle de la viscosité élongationnelle en fonction du temps.

Par viscosité élongationnelle, on entend désigner la viscosité élongationnelle telle que déterminée au moyen d'un rhéomètre, à une température supérieure de 20 à 40 °C à la température de fusion du polyester aliphatique thermoplastique, en particulier à une température supérieure de 20 à 40 °C à la température de fusion des polymères de l'ε-caprolactone (la température est habituellement de 80 oC pour les homopolymères de l'ε-caprolactone), pour un gradient d'élongation de 1 s⁻¹, sur un échantillon obtenu par extrusion et soumis à une relaxation des contraintes internes avant les mesures.

Les compositions selon l'invention se caractérisent de plus en ce que le point d'inflexion correspondant à l'augmentation exponentielle de la viscosité élongationnelle en fonction du temps est en général inférieur à 3 secondes, de préférence inférieur à 2 secondes.

Par polyesters aliphatiques thermoplastiques, on entend désigner, aux fins de la présente invention, les polyesters et copolyesters aliphatiques dans lesquels les fonctions ester sont séparées par un enchaînement d'au moins 2 atomes de carbone, éventuellement substitués.

A titre de tels polyesters ou copolyesters, on peut notamment citer ceux dérivés des hydroxyalcanoates, en particulier du 3-hydroxybutyrate, du 3-hydroxyvalérate et du 3-hydroxypropionate, mais aussi le polybutylene succinate et les polymères de l'ε-caprolactone.

Les polymères de l'ε-caprolactone sont tout particulièrement préférés.

Les polyesters aliphatiques thermoplastiques des compositions selon l'invention sont donc de préférence des polymères de l'ε-caprolactone.

Par polymères de l'ε-caprolactone, on entend désigner aussi bien les homopolymères de l'ε-caprolactone que les copolymères à teneur prépondérante en ε-caprolactone, par exemple au moins 50 % en poids, avec d'autres monomères, de préférence avec d'autres lactones cycliques. Parmi ces lactones cycliques, on peut citer par exemple la β-propiolactone, la γ-butyrolactone, la δ-valérolactone, la 1,4-dioxane-2-one, la 1,4-dioxépane-2-one, la 1,5-dioxépane-2-one, le glycolide (1,4-dioxane-2,5-dione) et leurs dérivés substitués ainsi que le L-lactide, le D-lactide, le DL-lactide.

Les polymères de l'ε-caprolactone sont de préférence des homopolymères de l'ε-caprolactone.

Les compositions de polyesters aliphatiques thermoplastiques, en particulier de polymères de l'ε-caprolactone, se caractérisent également généralement par une relation quasi linéaire (absence d'un plateau Newtonien) entre la viscosité dynamique et la fréquence lorsque celles-ci sont portées en graphique logarithmique.

La viscosité dynamique est habituellement mesurée à une température supérieure de 20 à 40 °C à la température de fusion du polyester aliphatique thermoplastique, en particulier à une température supérieure de 20 à 40 °C à la température de fusion des polymères de l'ε-caprolactone (la température est habituellement de 80 °C pour les homopolymères de l'ε-caprolactone), entre 0,1 et 100 rad/s, au moyen d'un rhéogoniomètre à déformation imposée sur un échantillon d'un diamètre de 25 mm et d'une épaisseur de 2 mm coupé dans une plaque pressée, placé entre deux plateaux parallèles et soumis à une déformation.

Les compositions selon l'invention se caractérisent en outre habituellement par une valeur de tan δ, à une température supérieure de 20 à 40 °C à la température de fusion du polyester aliphatique thermoplastique, en particulier à une température supérieure de 20 à 40 °C à la température de fusion des polymères de l'ε-caprolactone (la température est en général de 80 °C pour les homopolymères de l'ε-caprolactone) et 0,1 rad/sec, inférieure ou égale à 5, de préférence inférieure ou égale à 2,5.

Par tan δ, on entend désigner, aux fins de la présente invention, le rapport entre le module de perte G" et le module élastique G', mesurés à une même température supérieure de 20 à 40 °C à la température de fusion du polyester aliphatique thermoplastique, en particulier à une même température supérieure de 20 à 40 °C à la température de fusion des polymères de l'ε-caprolactone (la température est en général de 80 °C pour les homopolymères de l'ε-caprolactone), au moyen d'un rhéogoniomètre à déformation imposée sur un échantillon, placé entre 2 plateaux parallèles et soumis à une déformation, d'un diamètre de 25 mm et d'une épaisseur de 2 mm, coupé dans un plaque pressée.

Les compositions selon l'invention se caractérisent en outre habituellement par une cristallisation plus rapide que les compositions correspondantes caractérisées par une valeur de RMFI comprise entre 0,85 et 1,05.

Ainsi, les compositions selon l'invention présentent habituellement une température de cristallisation, mesurée par analyse thermique différentielle, au premier passage de refroidissement, après avoir effacer l'histoire thermique de celles-ci et avec une vitesse de balayage de 10 °K/min, au moins 1 °C plus élevée que celle des compositions correspondantes caractérisées par une valeur de RMFI comprise entre 0,85 et 1,05.

Par compositions correspondantes caractérisées par une valeur de RMFI comprise entre 0,85 et 1,05, on entend désigner, aux fins de la présente invention, les compositions correspondant à tout point de vue aux compositions selon l'invention, mais qui se caractérisent par une valeur de RMFI comprise entre 0,85 et 1,05. Une telle valeur de RMFI comprise entre 0,85 et 1,05 correspond généralement à un taux de branchement nul.

De façon alternative, la cinétique de cristallisation peut être mise en évidence par des mesures de la viscosité dynamique en fonction du temps, pour une fréquence de déformation et un traitement thermique donnés. Les compositions selon l'invention présentent ainsi une vitesse de cristallisation telle que le rapport entre cette vitesse de cristallisation et la vitesse de cristallisation des compositions correspondantes caractérisées par une valeur de RMFI comprise entre 0,85 et 1,05, mesurées à la même température, est supérieur à 1.

Par vitesse de cristallisation, on entend désigner, aux fins de la présente invention, la vitesse à laquelle les cristaux croissent dans les compositions selon l'invention.

La vitesse de cristallisation peut être déterminée au moyen d'un rhéogoniomètre à déformation imposée. Des mesures de la viscosité dynamique en fonction du temps, pour une fréquence de déformation donnée, sont réalisées sur un échantillon soumis à un traitement thermique déterminé de manière à suivre l'évolution de cette propriété rhéologique tout au long du processus de cristallisation. La pente de la courbe observée lorsque la viscosité dynamique augmente lors de la cristallisation est une mesure de la vitesse de cristallisation.

Les compositions selon l'invention présentent de préférence une vitesse de cristallisation telle que le rapport entre cette vitesse de cristallisation et la vitesse de cristallisation des compositions correspondantes caractérisées par une valeur de RMFI comprise entre 0,85 et 1,05, mesurées à la même température, est supérieur à 1,25, de manière particulièrement préférée supérieur à 1,5.

Les compositions selon l'invention présentent également un temps d'induction pour la cristallisation tel que le rapport entre ce temps d'induction et le temps d'induction des compositions correspondantes caractérisées par une valeur de RMFI comprise entre 0,85 et 1,05, mesurés à la même température, est inférieur à 1.

Par temps d'induction pour la cristallisation, on entend désigner, aux fins de la présente invention, le temps nécessaire pour que la nucléation se produise dans les compositions selon l'invention.

Le temps d'induction pour la cristallisation correspond au temps pendant lequel la viscosité dynamique reste constante avant d'augmenter significativement lors des mesures de viscosité dynamique en fonction du temps explicitées ci-dessus.

Les compositions selon l'invention présentent de préférence un temps d'induction pour la cristallisation tel que le rapport entre ce temps d'induction et le temps d'induction des compositions correspondantes caractérisées par une valeur de RMFI comprise entre 0,85 et 1,05, mesurés à la même température, est inférieur à 0,85, de manière particulièrement préférée inférieur à 0,7.

Les compositions selon l'invention comprennent de préférence un polyester aliphatique thermoplastique, en particulier un polymère de l'ε-caprolactone, dont la masse moléculaire moyenne en nombre, mesurée par chromatographie par perméation de gel, est supérieure ou égale à 10 000 g/mole.

La masse moléculaire moyenne en nombre du polyester aliphatique thermoplastique, en particulier du polymère de l'ε-caprolactone, est de préférence supérieure ou égale à 10 000, de manière particulièrement préférée supérieure ou égale à 25 000, de manière tout particulièrement préférée supérieure ou égale à 40 000 g/mole.

De préférence, les compositions selon l'invention comprennent un polyester aliphatique thermoplastique, en particulier un polymère de l'ε-caprolactone, dont la masse moléculaire moyenne en nombre, mesurée par chromatographie par perméation de gel, est inférieure ou égale à 200 000 g/mole.

La masse moléculaire moyenne en nombre du polyester aliphatique thermoplastique, en particulier du polymère de l'ε-caprolactone, est de préférence inférieure ou égale à 200 000, de manière particulièrement préférée inférieure ou égale à 175 000, de manière tout particulièrement préférée inférieure ou égale à 150 000 g/mole.

Par masse moléculaire moyenne en nombre mesurée par chromatographie par perméation de gel, on entend désigner la masse moléculaire moyenne en nombre mesurée par chromatographie par perméation de gel, au moyen d'une colonne de type Polymer Laboratories Mix-C et d'un réfractomètre de type Waters Differential Refractometer R401. La concentration de l'échantillon est de 20 mg/ml et le débit de 1 ml/min. Les standards utilisés sont des standards polystyrène. Dans le cas particulier des polymères de l'ε-caprolactone, le solvant utilisé est le chloroforme et le facteur de conversion utilisé est de 0,6.

Le polyester aliphatique thermoplastique, en particulier le polymère de l'ε-caprolactone, des compositions selon l'invention consiste généralement en un polymère unique.

Le polyester aliphatique thermoplastique des compositions selon l'invention peut également résulter du mélange d'au moins deux polyesters aliphatiques thermoplastiques. En particulier, le polymère de l'_{ε}-caprolactone des compositions selon l'invention peut également résulter du mélange d'au moins deux polymères de l'ε-caprolactone.

Le polyester aliphatique thermoplastique, en particulier le polymère de l'ε-caprolactone, peut résulter du mélange d'au moins deux polyesters aliphatiques thermoplastique, en particulier d'au moins deux polymères de l'ε-caprolactone, de masses moléculaires moyennes en nombre différentes mais telles que le polyester aliphatique thermoplastique, en particulier le polymère de l'_{ε}-caprolactone, des compositions selon l'invention se caractérise par une masse moléculaire moyenne en nombre telle que définie ci-dessus.

De préférence, le polyester aliphatique thermoplastique, en particulier le polymère de l'ε-caprolactone, des compositions selon l'invention résulte du mélange de 0,1 à 99,9 % en poids de la quantité totale de polymères, d'un polyester aliphatique thermoplastique, en particulier d'un polymère de l'ε-caprolactone, de faible masse moléculaire et de 99,9 à 0,1 % en poids de la quantité totale de polymères, d'un polyester aliphatique thermoplastique, en particulier d'un polymère de l'ε-caprolactone, de masse moléculaire élevée.

De manière particulièrement préférée, le polyester aliphatique thermoplastique, en particulier le polymère de l'ε-caprolactone, des compositions selon l'invention résulte du mélange de 0,1 à 80 % en poids de la quantité totale de polymères, d'un polyester aliphatique thermoplastique, en particulier d'un polymère de l'ε-caprolactone, de faible masse moléculaire et de 99,9 à 20 % en poids de la quantité totale de polymères, d'un polyester aliphatique thermoplastique, en particulier d'un polymère de l'ε-caprolactone, de masse moléculaire élevée.

De manière tout particulièrement préférée, le polyester aliphatique thermoplastique, en particulier le polymère de l'ε-caprolactone, des compositions selon l'invention résulte du mélange de 0,1 à 70 % en poids de la quantité totale de polymères, d'un polyester aliphatique thermoplastique, en particulier d'un polymère de l'ε-caprolactone, de faible masse moléculaire et de 99,9 à 30 % en poids de la quantité totale de polymères, d'un polyester aliphatique thermoplastique, en particulier d'un polymère de l'ε-caprolactone, de masse moléculaire élevée.

De manière vraiment préférée, le polyester aliphatique thermoplastique, en particulier le polymère de l'ε-caprolactone, des compositions selon l'invention résulte du mélange de 10 à 60 % en poids de la quantité totale de polymères, d'un polyester aliphatique thermoplastique, en particulier d'un polymère de l'ε-caprolactone, de faible masse moléculaire et de 90 à 40 % en poids de la quantité totale de polymères, d'un polyester aliphatique thermoplastique, en particulier d'un polymère de l'ε-caprolactone, de masse moléculaire élevée.

Le polyester aliphatique thermoplastique, en particulier le polymère de l'ε-caprolactone, de faible masse moléculaire a habituellement une masse moléculaire moyenne en nombre, mesurée par chromatographie par perméation de gel, supérieure ou égale à 10 000 g/mole et inférieure ou égale à 60 000 g/mole et le polyester aliphatique thermoplastique, en particulier le polymère de l'ε-caprolactone, de masse moléculaire élevée a habituellement une masse moléculaire moyenne en nombre, mesurée par chromatographie par perméation de gel, supérieure à 60 000 g/mole et inférieure ou égale à 200 000 g/mole.

Le polyester aliphatique thermoplastique, en particulier le polymère de l'ε-caprolactone, de faible masse moléculaire a habituellement une masse moléculaire moyenne en nombre, mesurée par chromatographie par perméation de gel, inférieure ou égale à 60 000 g/mole.

Le polyester aliphatique thermoplastique, en particulier le polymère de l'ε-caprolactone, de faible masse moléculaire a habituellement une masse moléculaire moyenne en nombre, mesurée par chromatographie par perméation de gel, supérieure ou égale à 10 000, de préférence supérieure ou égale à 25 000, de manière particulièrement préférée supérieure ou égale à 40 000 g/mole.

Le polyester aliphatique thermoplastique, en particulier le polymère de l'_{ε}-caprolactone, de masse moléculaire élevée a habituellement une masse moléculaire moyenne en nombre, mesurée par chromatographie par perméation de gel, supérieure à 60 000 g/mole.

Le polyester aliphatique thermoplastique, en particulier le polymère de l'_{ε}-caprolactone, de masse moléculaire élevée a habituellement une masse moléculaire moyenne en nombre mesurée par chromatographie par perméation de gel inférieure ou égale à 200 000, de préférence inférieure ou égale à 175 000, de manière particulièrement préférée inférieure ou égale à 150 000 g/mole.

Les compositions selon l'invention peuvent en outre comprendre une certaine quantité d'autres polymères biodégradables tels que par exemple l'acide polylactique, l'amidon natif ou thermoplastique et 1a cellulose modifiée ou non modifiée.

Les compositions selon l'invention peuvent en outre comprendre un ou plusieurs additifs usuels des polyesters aliphatiques thermoplastiques, en particulier des polymères de l'ε-caprolactone, tels que par exemple des agents stabilisants, des additifs anti-oxydants, des agents antistatiques, des colorants organiques ou minéraux, des agents anti-blocking, des agents nucléants et des matières de charge, etc.

De préférence, les compositions selon l'invention comprennent en outre au moins une matière de charge.

Toute matière de charge habituelle des polyesters aliphatiques thermoplastiques, en particulier des polymères de l'ε-caprolactone, peut être utilisée. Parmi celles-ci, on peut citer par exemple les noirs de carbone neutres ou basiques, les oxydes métalliques (en particulier l'oxyde de fer), la silice, le kaolin, le mica, le talc, les zéolites, les fibres de verre, les fibres naturelles (lin, bois, sisal), les matières de charge biodégradables (papier recyclé, amidon natif) et le carbonate de calcium. Les matières de charge peuvent également être traitées en surface pour faciliter leur dispersion dans les compositions selon l'invention.

Une matière de charges particulièrement préférée est le carbonate de calcium.

Les compositions selon l'invention comprennent habituellement jusqu'à 80 % en poids, de préférence jusqu'à 60 % en poids, de manière particulièrement préférée jusqu'à 50 % en poids, de manière tout particulièrement préférée jusqu'à 40 % en poids d'au moins une matière de charge.

Les compositions selon l'invention peuvent aussi comprendre également au moins un agent stabilisant.

Tout les agents stabilisants des polyesters aliphatiques thermoplastiques, en particulier des polymères de l'ε-caprolactone, peuvent être utilisés. Des agents stabilisants particulièrement préférés sont les composés comprenant un groupement phénol stériquement encombré, les composés phosphorés et leurs mélanges. Il s'agit par exemple de composés, tels que le 1,3,5-triméthyl-2,4,6-tris(3,5-t-butyl-4-hydroxybenzyl)benzène, le pentaérythrityle tétrakis-(3,5-di-t-butyl-4-hydroxyphénylpropionate), le tris-(2,4-di-t-butylphényl)phosphite ou le mélange de pentaérythrityle tétrakis-(3,5-di-t-butyl-4-hydroxyphénylpropionate) et de tris-(2,4-di-t-butylphényl)phosphite, de préférence en quantités égales. Un agent stabilisant qui convient bien est le 1,3,5-triméthyl-2,4,6-tris(3,5-t-butyl-4-hydroxybenzyl)benzène.

Les compositions selon l'invention peuvent être obtenues par n'importe quel procédé. De bons résultats sont obtenus si elles sont préparées au moyen du procédé selon l'invention.

L'invention concerne également un procédé de préparation de compositions de polyesters aliphatiques thermoplastiques selon lequel on fait réagir en masse fondue dans une extrudeuse, un polyester aliphatique thermoplastique avec un générateur de radicaux en une quantité comprise entre 0,01 et 0,2 % en poids par rapport au polyester aliphatique thermoplastique.

Les polyesters aliphatiques thermoplastiques sont définis ci-dessus et sont de préférence des polymères de l'ε-caprolactone.

Le générateur de radicaux est en général mis en oeuvre dans le procédé selon l'invention en une quantité suffisante pour permettre la réaction entre le générateur de radicaux et le polyester aliphatique thermoplastique, en particulier le polymère de l'ε-caprolactone. Par ailleurs, il est souhaitable que la quantité ne dépasse pas la quantité nécessaire car tout excès de générateur de radicaux peut entraîner une réticulation des polymères présents.

La quantité de générateur de radicaux est généralement comprise entre 0,01 et 0,2'% en poids par rapport au polyester aliphatique thermoplastique, en particulier par rapport au polymère de l'ε-caprolactone.

La quantité est habituellement au moins égale à 0,01, de préférence au moins égale à 0,025, de manière particulièrement préférée d'au moins 0,05 % en poids par rapport au polyester aliphatique thermoplastique, en particulier par rapport au polymère de l'ε-caprolactone. En général, la quantité est d'au plus 0,2, de préférence elle est d'au plus 0,15, de manière particulièrement préférée elle est d'au plus 0,125 % en poids par rapport au polyester aliphatique thermoplastique, en particulier par rapport au polymère de l'ε-caprolactone.

A titre de générateur de radicaux, on utilise de préférence un peroxyde organique, et plus particulièrement un alkylperoxyde. Parmi ceux-ci, on peut citer le peroxyde de t-butylcumyle, le 1,3-di(2-t-butylperoxyisopropyl)benzène, le 2,5-diméthyl-2,5-di(t-butylperoxy)hexane, le di(t-butyl)peroxyde et le 2,5-diméthyl-2,5-di(t-butylperoxy)-3-hexyne. Le 2,5-diméthyl-2,5-di-t-butylperoxyhexane (DHBP) est particulièrement préféré.

Le générateur de radicaux peut être introduit de quelque manière que ce soit pour autant qu'il soit introduit de manière continue dans le temps et qu'il soit bien dispersé dans la matière en fusion. Ainsi, par exemple, le générateur de radicaux peut être introduit par pulvérisation par exemple au moyen d'un injecteur de type spray ou d'un vaporisateur.

De préférence, le générateur de radicaux est introduit dans l'extrudeuse en mélange avec le dioxyde de carbone, par le biais d'un polyester aliphatique thermoplastique le contenant ou par le biais d'une matière de charge le contenant.

Selon un premier mode préféré de l'invention, le générateur de radicaux est introduit dans l'extrudeuse en mélange avec le dioxyde de carbone. Tout dispositif permettant le mélange du générateur de radicaux et du dioxyde de carbone et l'introduction de ce mélange dans l'extrudeuse peut être utilisé à cette fin. Selon les conditions de température et de pression, le dioxyde de carbone peut être à l'état liquide, gazeux ou supercritique.

Selon un deuxième mode préféré de l'invention, le générateur de radicaux est introduit dans l'extrudeuse par le biais d'un polyester aliphatique thermoplastique, de préférence un polymère de l'ε-caprolactone, contenant le générateur de radicaux.

Selon une première variante, le générateur de radicaux, de préférence le DHBP, est introduit dans l'extrudeuse sous la forme d'un mélange d'un polyester aliphatique thermoplastique, de préférence d'un polymère de l'ε-caprolactone, à l'état solide avec le générateur de radicaux, de préférence le DHBP, également à l'état solide. De manière particulièrement préférée, le polymère de l'g-caprolactone se présente sous la forme d'une poudre dont les particules ont une taille inférieure ou égale à 100 µm. De manière particulièrement préférée, le DHBP se présente sous la forme d'une poudre de talc imprégnée avec le DHBP.

Selon une seconde variante, le générateur de radicaux, de préférence le DHBP, est introduit dans l'extrudeuse par le biais d'un polyester aliphatique thermoplastique, de préférence un polymère de l'ε-caprolactone, préalablement imprégné avec le générateur de radicaux, de préférence le DHBP, lors d'un prétraitement.

Selon un troisième mode préféré de l'invention, le générateur de radicaux est introduit dans l'extrudeuse par le biais d'une matière de charge contenant le générateur de radicaux. De manière particulièrement préférée, le DHBP est introduit sous la forme d'un mélange de carbonate de calcium à l'état solide et de DHBP à l'état solide, par exemple sous la forme d'une poudre de talc imprégnée avec le DHBP.

Par réaction en masse fondue, on entend désigner aux fins de la présente invention, toute réaction en l'absence substantielle de solvant ou de diluant et à une température au moins égale à la température de fusion des polyesters aliphatiques thermoplastiques, en particulier des polymères de l'ε-caprolactone.

Par extrudeuse, on entend désigner tout dispositif continu comprenant au moins une zone d'alimentation et, à sa sortie, une zone d'évacuation précédée d'une zone de compression, cette dernière forçant la masse fondue à passer au travers de la zone d'évacuation. La zone d'évacuation peut en outre être suivie d'un dispositif de granulation ou d'un dispositif donnant à la matière extrudée une forme profilée, telle qu'un film ou une paraison de flacon. Avantageusement, il sera fait appel à des extrudeuses connues basées sur le travail de deux vis, qu'elles soient co- ou contra-rotatives.

De préférence, l'extrudeuse utilisée dans le procédé selon la présente invention est aménagée de manière à ce qu'elle comprenne successivement une zone d'alimentation, une zone de fusion de la matière, une zone d'homogénéisation, une zone de réaction, facultativement une zone d'introduction d'additifs, facultativement une zone de dégazage et une zone d'évacuation précédée d'une zone de compression. Chacune de ces zones a une fonction bien spécifique et se trouve à une température bien spécifique.

La zone d'alimentation a pour fonction d'assurer l'alimentation du ou des polymères. Elle se trouve habituellement à une température inférieure ou égale à 20°C.

La zone de fusion de la matière a pour fonction d'assurer la mise en fusion de la matière.

La zone d'homogénéisation a pour fonction d'homogénéiser la matière en fusion.

La zone de réaction a pour fonction d'assurer la réaction.

La température dans la zone de fusion et dans la zone d'homogénéisation de la matière est habituellement supérieure ou égale à la température de fusion du polymère et inférieure ou égale à la température à laquelle le temps de demi-vie du générateur de radicaux est dix fois supérieur au temps de résidence de la matière dans la zone.

La température dans la zone de réaction est habituellement supérieure ou égale à la température à laquelle le temps de demi-vie du générateur de radicaux est inférieur ou égal au temps de séjour de la matière dans cette zone.

La zone d'introduction d'additifs, a pour fonction d'assurer l'introduction d'additifs lorsque ceux-ci sont ajoutés. La température de cette zone est habituellement la même que celle de la zone de réaction ou est légèrement plus élevée.

La zone de dégazage a pour fonction de permettre l'élimination des produits de décomposition volatils du générateur de radicaux. La température de cette zone est la habituellement même que celle de la zone de réaction ou est légèrement inférieure.

La zone de compression a pour fonction de compresser la matière afin de la forcer au travers de la zone d'évacuation. La température dans la zone de compression est habituellement fonction de la viscosité de la matière à évacuer.

La zone d'évacuation a pour fonction d'assurer l'évacuation de la matière. La température dans la zone d'évacuation est habituellement fonction de la viscosité de la matière à évacuer.

Lorsque le générateur de radicaux est introduit dans l'extrudeuse en mélange avec le dioxyde de carbone, il est de préférence introduit dans la zone de fusion de la matière de l'extrudeuse.

Lorsque le générateur de radicaux est introduit dans l'extrudeuse par le biais d'un polyester aliphatique thermoplastique, en particulier d'un polymère de l'ε-caprolactone, il est de préférence introduit dans la zone d'alimentation de l'extrudeuse.

Lorsque le générateur de radicaux est introduit dans l'extrudeuse par le biais d'une matière de charge contenant le générateur de radicaux, il est introduit de préférence dans la zone d'alimentation de l'extrudeuse.

Au cours du procédé, on peut incorporer à un endroit quelconque, un ou plusieurs additifs usuels des polyesters aliphatiques thermoplastiques, en particulier des polymères de l'ε-caprolactone, tels que ceux décrits ci-dessus.

Dans une forme préférée du procédé, au moins une matière de charge est ajoutée pendant le procédé.

Les matières de charge préférées sont celles décrites ci-dessus. Une matière de charge tout particulièrement préférée est le carbonate de calcium.

Dans le procédé selon l'invention, on ajoute habituellement jusqu'à 80 % en poids, de préférence jusqu'à 60 % en poids, de manière particulièrement préférée jusqu'à 50 % en poids, de manière tout particulièrement préférée jusqu'à 40 % en poids d'au moins une matière de charge.

Dans le procédé selon l'invention, on peut aussi ajouter par exemple au moins un agent stabilisant.

Les agents stabilisants préférés sont ceux décrits ci-dessus. Un agent stabilisant qui convient bien est le 1,3,5-triméthyl-2,4,6-tris(3,5-t-butyl-4-hydroxybenzyl)benzène.

Lorsqu'un agent stabilisant est ajouté, il l'est de préférence en même temps que la matière de charge. Ceux-ci sont alors de préférence introduits dans la zone d'introduction des additifs.

L'invention concerne en outre les compositions de polyesters aliphatiques thermoplastiques, en particulier les polymères de l'ε-caprolactone, résultant du procédé selon l'invention.

La présente invention concerne également l'utilisation des compositions selon l'invention pour la fabrication de films, de mousses, de flacons ou de produits thermoformés.

L'invention concerne également les films obtenus au départ des compositions selon l'invention. De préférence, les films obtenus sont produits par extrusion soufflage.

L'invention concerne également l'utilisation des films obtenus pour la fabrication de sacs poubelles, de films pour l'agriculture, de films pour l'emballage, de linceuls, de couches-culottes et de films adhésifs.

L'invention concerne également les mousses obtenues au départ des compositions selon l'invention.

L'invention concerne également les flacons obtenus au départ des compositions selon l'invention.

L'invention concerne également les produits thermoformés obtenus au départ des compositions selon l'invention.

Les compositions de polyesters aliphatiques thermoplastiques, en particulier de polymères de l'ε-caprolactone, selon l'invention se caractérisent donc de manière avantageuse par un comportement rhéologique (viscosité élongationnelle, tan δ, viscosité dynamique) tel qu'elles se caractérisent par une augmentation de la résistance à la déformation lors du soufflage, d'où un procédé de soufflage extrêmement stable et la formation de bulles extrêmement stables et d'épaisseur homogène.

Les compositions selon l'invention se caractérise en outre par un taux de gel (taux de polymères insolubles) très faible, voire nul, donnant lieu à des films ne présentant pas ou très peu de zones hétérogènes et présentant dès lors une très bonne qualité de surface et une transparence adaptée aux applications visées.

Les compositions selon l'invention se caractérisent en outre par une vitesse de cristallisation plus grande que les compositions correspondantes selon l'art antérieur. Grâce à cela, le rendement de production des films réalisés est moins sensible au refroidissement et à la température ambiante.

Les films, mousses, flacons ou produits thermoformés obtenus au départ des compositions selon l'invention sont de plus biodégradables. Enfin, les films obtenus se caractérisent également par une très bonne imprimabilité.

Les exemples qui suivent servent à illustrer la présente invention sans pour autant en limiter la portée.

### Poly-ε-caprolactones

Les poly-ε-caprolactones utilisées sont les poly-ε-caprolactones commerciales CAPA®650 et CAPA®680 vendues par SOLVAY INTEROX. Elles sont caractérisées par :
- Une masse moléculaire moyenne en nombre de 44 000 g/mole pour les poly-ε-caprolactones CAPA®650 et de 70 000 g/mole pour la poly-ε-caprolactone CAPA®680. La masse moléculaire moyenne en nombre est mesurée par chromatographie par perméation de gel, en utilisant le chloroforme comme solvant, au moyen d'une colonne de type Polymer Laboratories Mix-C et d'un réfractomètre de type Waters Differential Refractometer R401. La concentration de l'échantillon est de 20 mg/ml et le débit de 1 ml/min. Les standards utilisés sont des standards polystyrène et le facteur de conversion utilisé est de 0,6.
- Une température de fusion de 58-60 °C pour les poly-ε-caprolactones CAPA®650 et pour la poly-ε-caprolactone CAPA®680. La température de fusion est mesurée par analyse thermique différentielle, au deuxième passage et avec une vitesse de balayage de 10 °K/min.

La poly-ε-caprolactone CAPA® 65100 vendue par SOLVAY INTEROX a également été utilisée. Cette poly-ε-caprolactone est chimiquement identique à la poly-ε-caprolactone CAPA® 650 mais est fournie sous la forme d'une poudre dont les particules ont une taille inférieure ou égale à 100 µm.

### Générateur de radicaux

Le générateur de radicaux utilisé est le 2,5-diméthyl-2,5-di-t-butylperoxyhexane (DHBP) vendu sous la marque LUPERSOL® 101 par PEROXID CHEMIE ou le 2,5-diméthyl-2,5-di-t-butylperoxyhexane (DHBP) absorbé sur du talc, vendu sous la dénomination DHBP-45-IC par PEROXID CHEMIE.

### Matière de charge

La matière de charge, lorsqu'elle est utilisée, est le carbonate de calcium vendu sous la marque OMYA BLH™ par OMYA Bénélux.

### Agent stabilisant

L'agent stabilisant, lorsqu'il est utilisé, est le 1,3,5-triméthyl-2,4,6-tris(3,5-t-butyl-4-hydroxybenzyl)benzène vendu sous la marque IRGANOX®1330 par CIBA.

### Extrudeuses

Une première extrudeuse utilisée est l'extrudeuse double vis co-rotative WERNER & PFLEIDERER ZSK® 40. Le diamètre des vis est de 40 mm et leur longueur est de 1360 mm. La vitesse de rotation des vis est de 200 rpm (rotations par minute).

L'extrudeuse est aménagée de manière à ce qu'elle comprenne successivement une zone d'alimentation, une zone de fusion de la matière, une zone d'homogénéisation, une zone de réaction, facultativement une zone d'introduction d'additifs et une zone d'évacuation précédée d'une zone de compression. Chacune de ces zones se trouve à une température bien spécifique.

La zone d'alimentation en polymères de l'ε-caprolactone se trouve à une température inférieure ou égale à 20 °C.

La zone de fusion de la matière se trouve à une température de 130 °C. Le DHBP est introduit dans cette zone en mélange avec le dioxyde de carbone au moyen du dispositif d'introduction décrit ci-dessous.

La zone d'homogénéisation se trouve à une température de 130 °C.

La zone de réaction se trouve à une température de 180 °C.

La zone d'introduction des additifs (matière de charge et agent stabilisant), lorsqu'ils sont ajoutés, se trouve à une température de 180 °C.

La zone de compression est à une température de 180 °C

La zone d'évacuation est à une température de 180 °C.

Une seconde extrudeuse utilisée est l'extrudeuse double vis co-rotative WERNER & PFLEIDERER ZSK® 58. Le diamètre des vis est de 58 mm et leur longueur est de 2160 mm. La vitesse de rotation des vis est de 200 rpm (rotations par minute).

L'extrudeuse est aménagée de manière à ce qu'elle comprenne successivement une zone d'alimentation, une zone de fusion de la matière, une zone d'homogénéisation, une zone de réaction, facultativement une zone d'introduction d'additifs et une zone de compression-évacuation précédée d'une zone de dégazage. Chacune de ces zones se trouve à une température bien spécifique.

La zone d'alimentation en polymères de l'ε-caprolactone se trouve à une température inférieure ou égale à 20 °C. le DHBP est introduit dans cette zone sous la forme d'un mélange avec un polymère de l'ε-caprolactone.

La zone de fusion de la matière se trouve à une température de 120 °C.

La zone d'homogénéisation se trouve à une température de 120 °C.

La zone de réaction se trouve à une température de 180 °C.

La zone de dégazage est à une température de 160 °C

La zone de compression-évacuation est à une température de 120 °C.

### Dispositif d'introduction du DHBP LUPERSOL® 101 en mélange avec le dioxyde de carbone

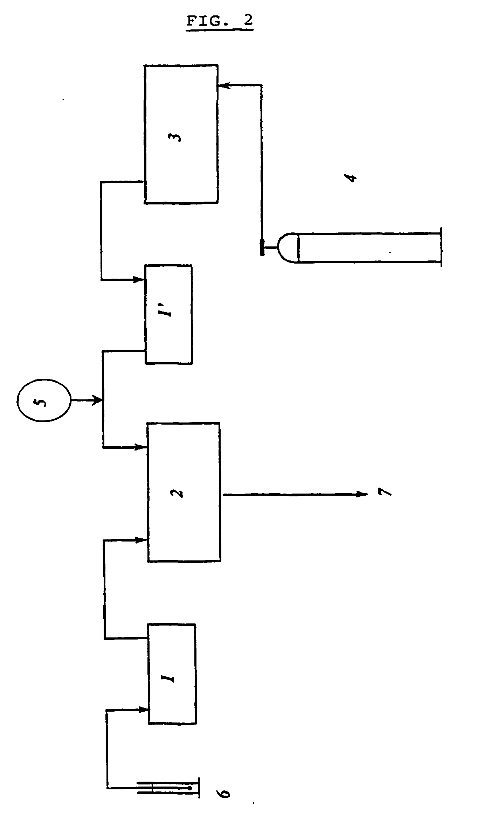

Le dispositif d'introduction du peroxyde organique en mélange avec le dioxyde de carbone est schématiquement représenté à la figure 2.

Le DHBP LUPERSOL® 101 contenu dans le réservoir 6 est alimenté à la chambre de mélange 2 par l'intermédiaire de la pompe 1. Le dioxyde de carbone liquide contenu dans le réservoir 4 est refroidi à -10 °C dans le cryothermostat 3 avant d'être alimenté dans la chambre de mélange 2 par l'intermédiaire d'une pompe 1'. Le mélange du DHBP et du dioxyde de carbone liquide réalisé dans la chambre de mélange est ensuite évacué dans l'injecteur 7 dont la pression est relevée au moyen d'un capteur de pression 5.

Le réservoir de dioxyde de carbone liquide 4 est une bonbonne sous pression de dioxyde de carbone.

Les pompes 1 et 1' sont des pompes du type GILSON 305 ou 306. La tête de la pompe l' prévue pour le dioxyde de carbone est équipée d'un thermostat kit 5/10/25SG de GILSON qui permet de refroidir la tête à-10°C. Le liquide refroidissant est l'isopropanol refroidi dans un cryo-thermostat type JUBALO F30.

Ce même cryo-thermostat est utilisé pour refroidir le dioxyde de carbone liquide (cryo-thermostat 3)

La chambre de mélange 2 est un mélangeur analytique muni d'une hélice du type GILSON 811C.

L'injecteur 7 est un injecteur permettant de travailler sous haute pression (supérieure à 74 bar).

Un capteur de pression 5 du type GILSON 806 est placé entre la pompe 1' et la chambre de mélange 2 afin de relever la pression dans l'injecteur (entre 90 et 120 bar).

L'injecteur du dispositif d'introduction est disposé perpendiculairement au fourreau de l'extrudeuse et débouche tangentiellement au filet de la vis d'extrusion. Il est précisément disposé perpendiculairement à la zone de fusion de l'extrudeuse. Le dioxyde de carbone se trouve généralement à l'état supercritique au niveau de l'injecteur.

### Réalisation du mélange du DHBP-45-IC avec la poly-ε-caprolactone CAPA® 65100

Le 2,5-diméthyl-2,5-di-t-butylperoxyhexane DHBP-45-IC a été mélangé avec la poly-ε-caprolactone CAPA® 65100 dans un mélangeur agité à vitesse lente, à raison de 30 g de DHBP-45-IC par kg de poly-ε-caprolactone CAPA® 65100.

### Caractérisation des compositions obtenues

Les compositions obtenues sont caractérisés par :
- les mesures des MFI pour la détermination du RMFI,
- la mesure du taux de gel,
- la mesure de la masse moléculaire moyenne en nombre,
- la mesure de leur température de cristallisation,
- les mesures de rhéométrie dynamique (ARES) pour la détermination de la vitesse de cristallisation et du temps d'induction, d'une part, et pour la détermination des propriétés viscoélastiques (viscosité dynamique, tan δ) en fonction de la fréquence, d'autre part,
- les mesures de rhéométrie élongationnelle (RME) pour la détermination de la viscosité élongationnelle.

### Détermination du RMFI

Le RMFI est obtenu en calculant le rapport entre le MFI_{8/2} obtenu avec une filière cylindrique (hauteur 8 mm +/- 0,025, diamètre 2,095 mm +/- 0,003) et le MFI_{0,3/1} obtenu avec une filière conique telle que représentée à la figure 1. La filière conique est caractérisée par un angle du cône de 60° +/- 0,5, un diamètre extérieur de 9,48 mm, un diamètre intérieur de 1,0 mm +/- 0,025, une hauteur totale de 2,55 mm +/- 0,025 et une hauteur de la section cylindrique de 0,3 mm +/- 0,025. Les deux MFI sont obtenus en mesurant la quantité de polymère passant au travers d'une filière calibrée, dont les caractéristiques sont reprises ci-dessus, à une température de 100 °C et sous l'action d'une masse de 5 kg et à une même température. Les MFI s'expriment en dg/min.

### Mesure du taux de gel

Le taux de gel est le taux de polymères insolubles dans le chloroforme extraits au moyen d'un soxhlet après 8 heures.

### Mesure de la masse moléculaire moyenne en nombre

La masse moléculaire moyenne en nombre est mesurée par chromatographie par perméation de gel, en utilisant le chloroforme comme solvant, au moyen d'une colonne de type Polymer Laboratories Mix-C et d'un réfractomètre de type Waters Differential Refractometer R401. La concentration de l'échantillon est de 20 mg/ml et le débit de 1 ml/min. Les standards utilisés sont des standards polystyrène et le facteur de conversion utilisé est de 0,6.

### Mesure de la température de cristallisation

La température de cristallisation des compositions est mesurée par analyse thermique différentielle, au premier passage de refroidissement, après avoir effacer l'histoire thermique de celles-ci et avec une vitesse de balayage de 10 K/min.

Ainsi, l'échantillon, après avoir été maintenu à-50°C pendant 5 minutes, est porté à une température de 120 °C avec une vitesse de balayage constante de 10 °K/min. Après avoir été maintenu pendant 5 minutes à 120 °C, l'échantillon est soumis à un refroidissement avec une vitesse de balayage de 10 °K/min. et c'est lors de ce refroidissement qu'est mesurée la température de cristallisation.

### Mesures de rhéométrie dynamique

Les mesures de rhéométrie dynamique sont réalisées au moyen d'un rhéogoniomètre à déformation imposée, commercialisé par RHEOMETRICS sous la dénomination ADVANCED RHEOLOGICAL EXPANSION SYSTEM (ARES). Les mesures sont réalisées sur l'échantillon, placé entre 2 plateaux parallèles et soumis à une déformation périodique appliquée par le mouvement d'un plateau par rapport à l'autre, d'un diamètre de 25 mm et d'une épaisseur de 2 mm coupé dans une plaque pressée.

Pour la détermination de la vitesse de cristallisation et du temps d'induction, l'échantillon est soumis à un traitement thermique déterminé de manière à suivre l'évolution de la viscosité dynamique, à une fréquence de déformation déterminée, en fonction du temps, tout au long du processus de cristallisation. Le traitement thermique consiste à chauffer l'échantillon jusqu'à 150°C avec une vitesse de 24 °C/min, de le maintenir à 150 °C pendant 10 minutes, de le refroidir jusqu'à 47 °C avec une vitesse de 24 °C/min et ensuite jusqu'à 45 °C avec une vitesse de 2 °C/min. L'évolution de la viscosité dynamique à 45 °C, en fonction du temps, à une fréquence de 1 rad/s, est portée en graphique.

La pente de la courbe observée lorsque la viscosité dynamique augmente lors de la cristallisation est une mesure de la vitesse de cristallisation.

Le temps d'induction pour la cristallisation correspond au temps pendant lequel la viscosité dynamique reste constante avant d'augmenter significativement lors de la nucléation dans les polymères de l'ε-caprolactone, le temps zéro correspondant à l'arrivée à la température de 45 °C.

Pour la détermination des propriétés viscoélastiques (viscosité dynamique, tan δ) en fonction de la fréquence, l'échantillon est soumis à une déformation à une température constante de 80 °C. Le résultat de la mesure (diagramme ARES) est exprimé par la variation, à 80 °C, de la viscosité dynamique exprimée en Pa.s ou des modules G" (module de perte) et G' (module élastique), exprimés en Pa, en fonction de la fréquence exprimée en rad/s . Tan δ est le rapport entre les modules G" et G'.

### Mesures de rhéométrie élongationnelle

Les mesures de rhéométrie élongationnelle sont réalisées au moyen d'un rhéomètre commercialisé par RHEOMETRICS sous la dénomination RME (RHEOMETRICS ELONGATIONAL RHEOMETER FOR MELTS). L'échantillon (52 x 7 x 1,5 mm) est obtenu par extrusion et est soumis à une procédure de relaxation des contraintes internes avant les mesures.

Le résultat de la mesure (diagramme RME) est exprimé par la variation, à 80 °C de la viscosité élongationnelle à l'état fondu (exprimée en kPa.s) en fonction du temps (exprimé en s) pour un gradient d'élongation (exprimé en s⁻¹) de 1.

### Films

Des films ont été réalisés par extrusion soufflage au départ des compositions obtenues, lorsque cela était possible, au moyen d'une extrudeuse du type DOLCI 20. Cette extrudeuse monovis est utilisée pour porter la matière à l'état fondu (75 - 150 °C) avant de la forcer à travers une filière annulaire de 30 mm de diamètre et de 0,75 mm d'entrefer (noyau de 28,5 mm), orientée perpendiculairement à l'axe de l'extrudeuse, de manière à ce que le produit sorte verticalement vers le haut. Le débit de matière est réglé en changeant la vitesse de rotation de la vis. La paraison tubulaire est alors gonflée par une pression d'air intérieur et refroidie extérieurement par un flux d'air réparti uniformément autour de la bulle ainsi formée à quelques centimètres au dessus de la filière. L'air peut être réfrigéré, mais est avantageusement à température ambiante. Le taux de gonflement (défini comme égal au rapport du périmètre du film sur le périmètre de la filière) est réglé en ajustant la pression d'air intérieur. La bulle est ensuite aplatie progressivement par 2 guides, puis pincée entre 2 rouleaux, dont au moins un est caoutchouté et au moins un est entraîné. La paraison tubulaire est donc également étirée dans le sens axial par les deux rouleaux pinceurs. Le taux d'étirage (défini comme égal au rapport de la vitesse du film à l'enroulement sur la vitesse du film à la filière) est ajusté en faisant varier la vitesse des rouleaux pinceurs. L'épaisseur finale du film est fonction de l'entrefer de la filière, du taux de gonflement et du taux d'étirage.

### Caractérisation des films obtenus

Des mesures de traction, de résistance à l'impact et de résistance à la déchirure ont été réalisées sur les films obtenus.

### Mesures de traction

Les mesures de traction sont effectuées selon la norme ISO 527-3 (1993) sur des éprouvettes de 50 x 15 mm², à 23 °C et 50 % d'humidité relative et avec une vitesse de 100 mm/min (machine de traction INSTRON).

On détermine la contrainte nominale (rapport de la force de traction sur la section initiale) et l'allongement (rapport de la longueur après traction sur la longueur initiale, soit 50 mm) dans le sens de l'extrusion ou dans le sens perpendiculaire à l'extrusion.

La contrainte nominale s'exprime en MPa et l'allongement en %.

### Mesures de résistance à l'impact

La résistance à l'impact est mesurée selon la norme ISO 7765-1 (1998) (méthode A). Le poids ainsi déterminé est rapporté à l'épaisseur de l'échantillon pour exprimer le résultat en g/µm.

### Mesures de résistance à la propagation d'une déchirure

La résistance à la propagation d'une déchirure est mesurée selon la technique "Elmendorf" décrite dans la norme ASTM-D1922 sur des éprouvettes à rayon constant, à 23 °C et 50 % d'humidité relative avec un pendule de 1,6 kgf. Dans le cas de films présentant une faible résistance au déchirement, plusieurs échantillons ont été superposés comme le précise la norme. Pour éviter qu'ils ne se soudent lors de l'impact, les différentes couches ont alors été séparées par un très fin intercalaire, pour lequel il a été vérifié qu'il ne perturbe pas la mesure.

On détermine la résistance à la propagation d'une déchirure dans le sens de l'extrusion ou dans le sens perpendiculaire à l'extrusion.

La résistance à la propagation d'une déchirure s'exprime en N.

### Exemple 1

La poly-ε-caprolactone CAPA®680 a été introduite dans la zone d'alimentation de l'extrudeuse WERNER & PFLEIDERER ZSK® 40 avec un débit de 30 kg/h et s'est propagée au travers des différentes zones de l'extrudeuse.

Dans la zone de fusion de l'extrudeuse, le DHBP LUPERSOL® 101, en mélange avec le dioxyde de carbone, a été pulvérisé sur la poly-ε-caprolactone au moyen du dispositif d'introduction décrit ci-dessus. Le DHBP LUPERSOL® 101 a été introduit à raison de 1 g par kg de poly-ε-caprolactone CAPA®680 et à raison de 570 µl de DHBP dans 5 ml de dioxyde de carbone par minute.

Les valeurs du RMFI, du taux de gel, de la masse moléculaire moyenne en nombre, de la température de cristallisation (T_{c}) et de tan δ mesurées sur la composition obtenue sont reprises au tableau I.

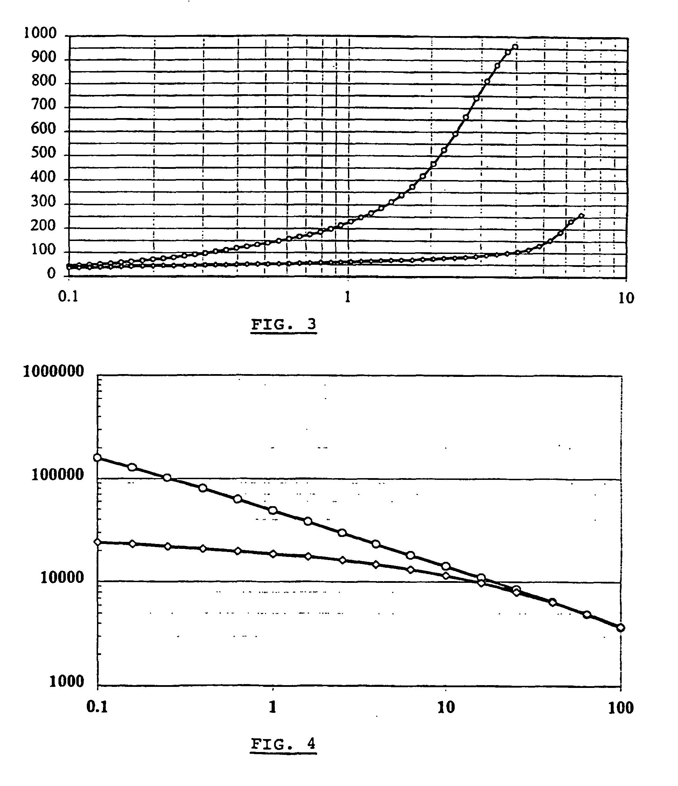

La variation de la viscosité élongationnelle (exprimée en kPa.s), à 80°C, en fonction du temps (exprimé en s) pour un gradient d'élongation (exprimé en s ⁻¹) de 1 est illustrée à la figure 3 (symbole O).

La variation de la viscosité dynamique (exprimée en Pa.s) en fonction de la fréquence (exprimée en rad/s) à 80 °C est illustrée à la figure 4 (symbole O).

Deux films (N° 1.1, 1.2) ont été réalisés au départ de la composition selon l'exemple 1 de la manière décrite ci-dessus et avec les conditions reprises ci-dessous.

| N° film | Débit, kg/h | Vitesse, m/min | Epaisseur, µm | Taux d'étirage | Taux de gonflement |
|---|---|---|---|---|---|
| 1.1 | 2,3 | 1,7 | 48 | 3 | 4,4 |
| 1.2 | 2,3 | 3,5 | 19 | 6,3 | 4,4 |

Les deux films se caractérisent par une résistance à l'impact respectivement de 1,2 et 2,3 g/µm. Le film N° 1.1 se caractérise par une résistance à la propagation d'une déchirure de 0,3 N dans le sens de l'extrusion et de 0,65 N dans le sens perpendiculaire à l'extrusion.

### Exemple 2 (comparatif)

L'exemple 1 a été reproduit en l'absence de DHBP.

Les valeurs du RMFI, du taux de gel, de la masse moléculaire moyenne en nombre, de la température de cristallisation (T_{c}) et de tan δ mesurées sur la composition obtenue sont reprises au tableau I.

La variation de la viscosité élongationnelle (exprimée en kPa.s), à 80 °C, en fonction du temps (exprimé en s) pour un gradient d'élongation (exprimé en s ⁻¹) de 1 est illustrée à la figure 3 (symbole ◇).

La variation de la viscosité dynamique (exprimée en Pa.s) en fonction de la fréquence (exprimée en rad/s) à 80 °C est illustrée à la figure 4 (symbole ◇).

Il n'a pas été possible d'obtenir un film par extrusion soufflage de la composition selon l'exemple 2.

### Exemple 3

L'exemple 1 a été reproduit en remplaçant la poly-ε-caprolactone CAPA®680 par un mélange de 40 % en poids de la poly-ε-caprolactone CAPA®680 et de 60 % en poids de la poly-ε-caprolactone CAPA®650. La masse moléculaire moyenne en nombre, mesurée par chromatographie par permeation de gel est de 55 000 g/mole.

Les valeurs du RMFI, du taux de gel, de la masse moléculaire moyenne en nombre, de la température de cristallisation (T_{c}) et de tan δ mesurées sur la composition obtenue sont reprises au tableau I.

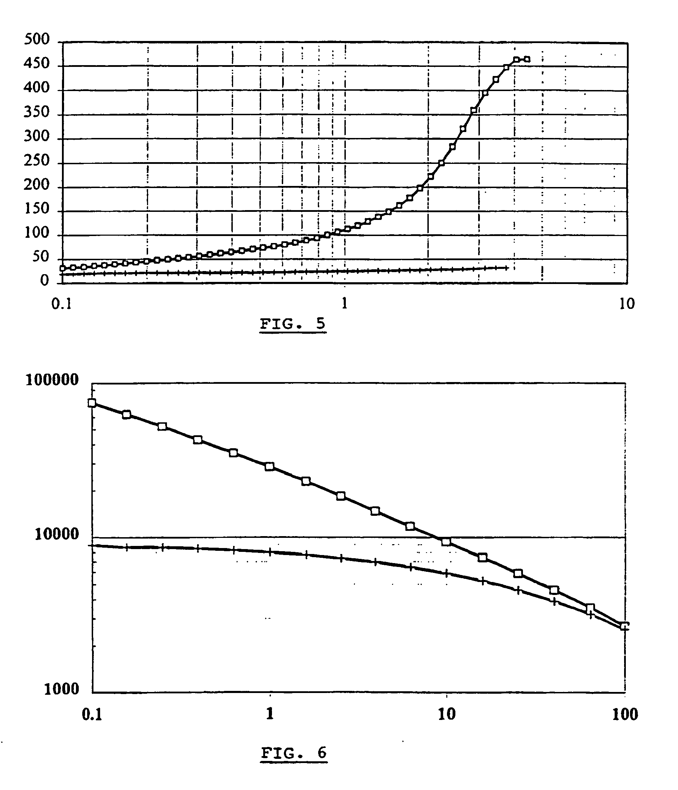

La variation de la viscosité élongationnelle (exprimée en kPa.s), à 80 °C, en fonction du temps (exprimé en s) pour un gradient d'élongation (exprimé en s ⁻¹) de 1 est illustrée à la figure 5 (symbole □)

La variation de la viscosité dynamique (exprimée en Pa.s) en fonction de la fréquence (exprimée en rad/s) à 80 °C est illustrée à la figure 6 (symbole □).

Un film a été réalisé au départ de la composition selon l'exemple 3 de la manière décrite ci-dessus et avec les conditions reprises ci-dessous.

| N° film | Débit, kg/h | Vitesse, m/min | Epaisseur, µm | Taux d'étirage | Taux de gonflement |
|---|---|---|---|---|---|
| 3.1 | 2,1 | 1,3 | 59 | 2,5 | 4,5 |

Les mesures de traction réalisées sur ce film donnent les résultats suivants : la contrainte nominale dans le sens de l'extrusion est de 46 MPa, l'allongement dans le sens de l'extrusion est de 1000 %, la contrainte nominale dans le sens perpendiculaire à l'extrusion est de 48 MPa et l'allongement dans le sens perpendiculaire à l'extrusion est de 950 %.

Le film se caractérise par une résistance à l'impact de 0,9 g/µm.

Le film se caractérise également par une résistance à la propagation d'une déchirure de 0,7 N dans le sens de l'extrusion et de 0,95 N dans le sens perpendiculaire à l'extrusion.

### Exemple 4 (comparatif)

L'exemple 3 a été reproduit en l'absence de DHBP.

Les valeurs du RMFI, du taux de gel, de la masse moléculaire moyenne en nombre, de la température de cristallisation (T_{c}) et de tan δ mesurées sur la composition obtenue sont reprises au tableau I.

La variation de la viscosité élongationnelle (exprimée en kPa.s), à 80 °C, en fonction du temps (exprimé en s) pour un gradient d'élongation (exprimé en s ⁻¹) de 1 est illustrée à la figure 5 (symbole +).

La variation de la viscosité dynamique (exprimée en Pa.s) en fonction de la fréquence (exprimée en rad/s) à 80 °C est illustrée à la figure 6 (symbole +).

Il n'a pas été possible d'obtenir un film par extrusion soufflage de la composition selon l'exemple 4.

Le rapport entre la vitesse de cristallisation de la composition selon l'invention (exemple 3) et la vitesse de cristallisation de la composition correspondante (exemple 4 comparatif) est égal à 3,45.

Le rapport entre le temps d'induction de la composition selon l'invention (exemple 3) et le temps d'induction de la composition correspondante (exemple 4 comparatif) est égal à 0,65.

### Exemple 5

L'exemple 3 a été reproduit en ajoutant 30 % en poids, par rapport à la composition finale, de carbonate de calcium OMYA BLH™ et 3,5 g de l'agent stabilisant IRGANOX®1330 par kg de poly-ε-caprolactone.

Les valeurs du RMFI, du taux de gel, de la masse moléculaire moyenne en nombre, de la température de cristallisation (T_{c}) et de tan δ mesurées sur la composition obtenue sont reprises au tableau I.

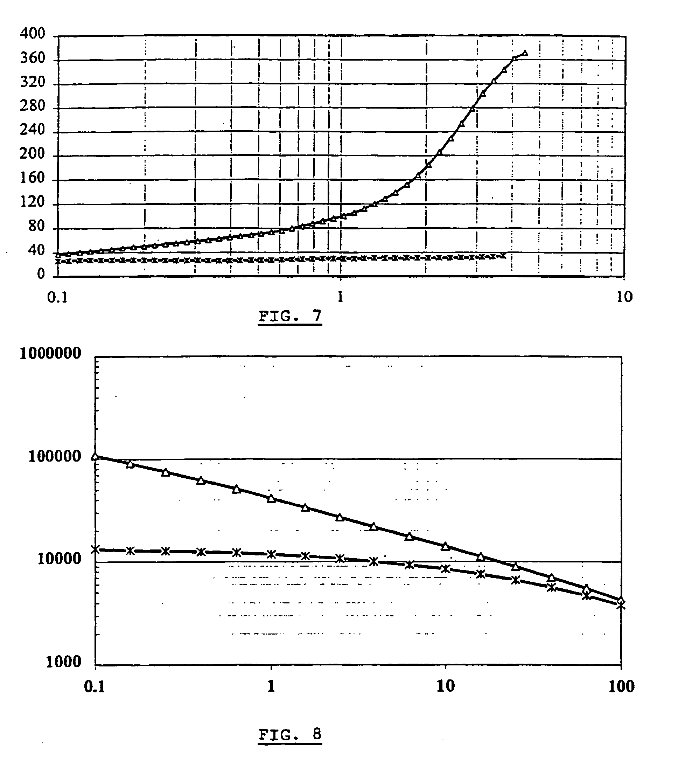

La variation de la viscosité élongationnelle (exprimée en kPa.s), à 80 °C, en fonction du temps (exprimé en s) pour un gradient d'élongation (exprimé en s ⁻¹) de 1 est illustrée à la figure 7 (symbole Δ).

La variation de la viscosité dynamique (exprimée en Pa.s) en fonction de la fréquence (exprimée en rad/s) à 80 °C est illustrée à la figure 8 (symbole Δ).

Un film (N° 5.1) a été réalisé au départ de la composition selon l'exemple 5 de la manière décrite ci-dessus et avec les conditions reprises ci-dessous.

| N° film | Débit, kg/h | Vitesse, m/min | Epaisseur, µm | Taux d'étirage | Taux de gonflement |
|---|---|---|---|---|---|
| 5.1 | 3 | 1,4 | 50 | 2,4 | 4,6 |

Le film N° 5.1 se caractérise par une résistance à l'impact inférieure à 0,8 g/µm.

### Exemple 6 (comparatif)

L'exemple 5 a été reproduit en l'absence de DHBP.

Les valeurs du RMFI, du taux de gel, de la masse moléculaire moyenne en nombre, de la température de cristallisation (T_{c}) et de tan δ mesurées sur la composition obtenue sont reprises au tableau I.

La variation de la viscosité élongationnelle (exprimée en kPa.s), à 80 °C, en fonction du temps (exprimé en s) pour un gradient d'élongation (exprimé en s -1) de 1 est illustrée à la figure 7 (symbole *).

La variation de la viscosité dynamique (exprimée en Pa.s) en fonction de la fréquence (exprimée en rad/s) à 80 °C est illustrée à la figure 8 (symbole ∗).

Il n'a pas été possible d'obtenir un film par extrusion soufflage de la composition selon l'exemple 6.

### Exemple 7

Un mélange de 40% en poids de la poly-ε-caprolactone CAPA® 680 et de 60% en poids de la poly-ε-caprolactone CAPA® 650 a été introduit dans la zone d'alimentation de l'extrudeuse WERNER & PFLEIDERER ZSK® 58 et s'est propagée au travers des différentes zones de l'extrudeuse.

Dans la zone d'alimentation de l'extrudeuse, on a également introduit le DHBP sous la forme d'un mélange du DHBP-45-IC avec la poly-ε-caprolactone CAPA® 65100 tel que décrit ci-avant. Le débit total des poly-ε-caprolactones est de 150 kg/h et la quantité de DHBP est de 1 g/kg du mélange des poly-ε-caprolactones.

Les valeurs du RMFI, du taux de gel, de la masse moléculaire moyenne en nombre, de la température de cristallisation (T_{c}) et de tan δ mesurées sur la composition obtenue sont reprises au tableau I.

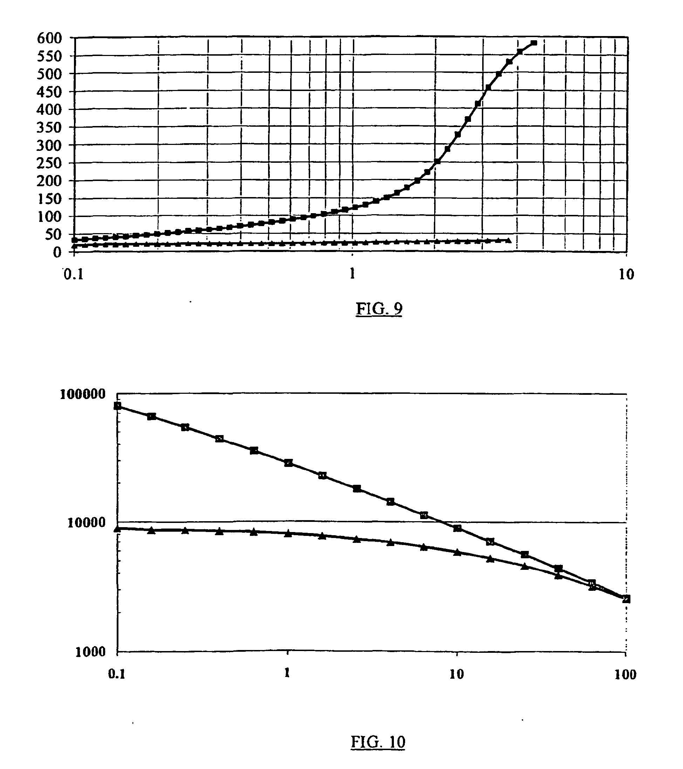

La variation de la viscosité élongationnelle (exprimée en kPa.s), à 80 °C, en fonction du temps (exprimé en s) pour un gradient d'élongation (exprimé en s ⁻¹) de 1 est illustrée à la figure 9 (symbole ■).

La variation de la viscosité dynamique (exprimée en Pa.s) en fonction de la fréquence (exprimée en rad/s) à 80 °C est illustrée à la figure 10 (symbole ■).

Un film a été réalisé au départ de la composition selon l'exemple 7 de la manière décrite ci-dessus et avec des conditions similaires à celles utilisées pour le film réalisé au départ de la composition selon l'exemple 3.

Le film obtenu se caractérise par une épaisseur homogène et par des caractéristiques similaires à celui obtenu au départ de la composition selon l'exemple 3.

### Exemple 8 (comparatif)

L'exemple 7 a été reproduit en l'absence de DHBP.

Les valeurs du RMFI, du taux de gel, de la masse moléculaire moyenne en nombre, de la température de cristallisation (T_{c}) et de tan δ mesurées sur la composition obtenue sont reprises au tableau I.

La variation de la viscosité élongationnelle (exprimée en kPa.s), à 80 °C, en fonction du temps (exprimé en s) pour un gradient d'élongation (exprimé en s ⁻¹) de 1 est illustrée à la figure 9 (symbole ▲).

La variation de la viscosité dynamique (exprimée en Pa.s) en fonction de la fréquence (exprimée en rad/s) à 80°C est illustrée à la figure 10 (symbole **▲**).

Il n'a pas été possible d'obtenir un film par extrusion soufflage de la composition selon l'exemple 8.

**Tableau I**

| Exemple | RMFI | Taux de gel (%) | Masse moléculaire moyenne en nombre (g/mole) | T_{c} (°C) | Tan_{δ} |
|---|---|---|---|---|---|
| 1 | 1,31 | 0 | 80000 | 35 | 1,15 |
| 2 (comparatif) | 0,96 | 0 | 70000 | 32 | 8,18 |
| 3 | 1,61 | 0 | 64000 | 36 | 1,64 |
| 4 (comparatif) | 0,90 | 0 | 55000 | 32 | 27,2 |
| 5 | 1,31 | 0 | 64000 | 36 | 1,62 |
| 6 (comparatif) | 0,98 | 0 | 55000 | 35 | 37,9 |
| 7 | 1,7 | 0 | 59000 | 34 | 1,47 |
| 8 (comparatif) | 0,90 | 0 | 55 000 | 32 | 27,2 |

De l'analyse des résultats du tableau I, il apparaît que les compositions selon l'invention se caractérisent par une température de cristallisation (T_{c}) qui est au moins 1 °C plus élevée que celles observées pour les compositions correspondantes. Par ailleurs, on constate que la vitesse de cristallisation des compositions selon l'invention est beaucoup plus grande que celle des compositions correspondantes.

Les compositions selon l'invention se caractérisent par ailleurs par une valeur de tan δ nettement plus faible que celles mesurées pour les compositions correspondantes.

De l'examen des figures 3, 5, 7 et 9, il apparaît que les compositions selon l'invention se caractérisent par ailleurs par une augmentation exponentielle de la viscosité élongationnelle en fonction du temps, caractéristique d'un durcissement structural sous contrainte, contrairement aux compositions correspondantes.

De plus, le point d'inflexion correspondant à l'augmentation exponentielle de la viscosité élongationnelle en fonction du temps est inférieur à 3 secondes, contrairement aux compositions correspondantes.

De l'examen des figures 4, 6, 8 et 10 (graphiques logarithmiques), il apparaît que les compositions selon l'invention se caractérisent par ailleurs par une relation quasi linéaire entre la viscosité dynamique et la fréquence. Les compositions correspondantes se caractérisent quant à elles par une évolution de la viscosité dynamique vers les fréquences décroissantes sous la forme d'un plateau Newtonien.

De l'examen des résultats relatifs aux films obtenus, il apparaît que les compositions selon l'invention permettent d'obtenir des films. Ces films sont résistants à la traction, à l'impact et à la déchirure. Par contre, les compositions correspondantes ne permettent pas d'obtenir des films par extrusion soufflage.

## Revendications

1. Procédé de préparation de compositions de polymères de l'ε-caprolactone selon lequel on fait réagir en masse fondue dans une extrudeuse, au moins un polymère de l'ε-caprolactone avec un générateur de radicaux en une quantité comprise entre 0,01 et 0,2 % en poids par rapport au polymère de l'ε-caprolactone, on y ajoute éventuellement au moins une matière de charge, le générateur de radicaux étant introduit dans l'extrudeuse en mélange avec du dioxyde de carbone, ou en mélange avec un polymère de l'ε-caprolactone.

2. Procédé selon la revendication 1 dans lequel le polymère de l'ε-caprolactone est choisi parmi les homopolymères de l'ε-caprolactone et les copolymères de l'ε-caprolactone.

3. Procédé de fabrication de films à base de compositions de polymères de l'ε-caprolactone comprenant un procédé conforme à la revendication 1 ou 2.

4. Procédé selon la revendication 3, dans lequel les films sont produits par extrusion soufflage.

5. Procédé de fabrication de mousses à base de compositions de polymères de l'ε-caprolactone comprenant un procédé conforme à la revendication 1 ou 2.

6. Procédé de fabrication de flacons à base de compositions de polymères de l'ε-caprolactone comprenant un procédé conforme à la revendication 1 ou 2.

7. Procédé de fabrication de produits thermoformés à base de compositions de polymères de l'ε-caprolactone comprenant un procédé conforme à la revendication 1 ou 2.

## Patentansprüche

1. Verfahren zur Herstellung von Zusammensetzungen von Polymeren des ε-Caprolactons, wonach man, in geschmolzener Masse in einem Extruder, wenigstens ein Polymer von ε-Caprolacton mit einem Radikalbildner in einer Menge von 0,01 bis 0,2 Gew.-%, bezogen auf das ε-Caprolactonpolymer, zur Reaktion bringt, gegebenenfalls wenigstens ein Füllstoffmaterial zusetzt, wobei der Radikalbildner im Gemisch mit Kohlendioxid oder im Gemisch mit einem ε-Caprolactonpolymer in den Extruder eingeführt wird.

2. Verfahren nach Anspruch 1, worin das ε-Caprolactonpolymer unter den ε-Caprolactonhomopolymeren und den ε-Caprolactoncopolymeren ausgewählt wird.

3. Verfahren zur Herstellung von Folien auf der Basis von Zusammensetzungen von ε-Caprolactonpolymeren, umfassend ein Verfahren gemäß Anspruch 1 oder 2.

4. Verfahren nach Anspruch 3, worin die Folien durch Blasextrusion hergestellt werden.

5. Verfahren zur Herstellung von Schäumen auf der Basis von Zusammensetzungen von ε-Caprolactonpolymeren, umfassend ein Verfahren gemäß Anspruch 1 oder 2.

6. Verfahren zur Herstellung von Fläschchen auf der Basis von Zusammensetzungen von ε-Caprolactonpolymeren, umfassend ein Verfahren gemäß Anspruch 1 oder 2.

7. Verfahren zur Herstellung von warmgeformten Produkten auf der Basis von Zusammensetzungen von ε-Caprolactonpolymeren, umfassend ein Verfahren gemäß Anspruch 1 oder 2.

## Claims

1. A process for preparation of compositions of ε-caprolactone polymers, **characterized in that** there is caused to react in a molten mass in an extruder at least one ε-caprolactone polymer with a radical generator in a quantity ranging between 0.01 and 0.2% by weight in relation to the ε-caprolactone polymers, optionally at least one filler material is added thereto, the radical generator being introduced into the extruder in a mixture with carbon dioxide, or in a mixture with a ε-caprolactone polymer.

2. A process according to claim 1, **characterized in that** the ε-caprolactone polymer is chosen from homopolymers of ε-caprolactone and from copolymers of ε-caprolactone.

3. Process for the manufacture of films from compositions of ε-caprolactone polymers, containing a process according to claim 1 or 2.

4. 4 - Process according to claim 3, wherein the films are produced by blowing extrusion.

5. Process for the manufacture of foams from compositions of ε-caprolactone polymers, containing a process according to claim 1 or 2.

6. Process for the manufacture of bottles from compositions of ε-caprolactone polymers, containing a process according to claim 1 or 2.

7. Process for the manufacture of thermally molded products form compositions of ε-caprolactone polymers, containing a process according to claim 1 or 2.
